# FASCICULE DE BREVET EUROPEEN

(11) **EP 0 447 308 B1**
(45) Date de publication et mention de la délivrance du brevet: **27.07.1994**
(21) Numéro de dépôt: 91400658.0
(22) Date de dépôt: 11.03.1991
(51) Int. Cl.: B60Q 3/02, B60J 3/02

(54) **Bras de support coudé pour pare-soleil alimenté électriquement par des conducteurs**
Gebogener Montagearm für Sonnenblende mit Leitungen zur Elektrizitätsversorgung
Supporting elbow for a sun-vizor with conductors providing electrical power

(30) Priorité: 13.03.1990 FR 9003194
(43) Date de publication de la demande: 18.09.1991
(73) Titulaire: ROCKWELL AUTOMOTIVE BODY SYSTEMS-FRANCE EN ABREGE:ROCKWELL ABS-FRANCE, 92082 Paris La Defense 2 (FR)
(72) Inventeur: Prillard, Charles B., F-88360 Rupt sur Moselle (FR)
(74) Mandataire: Hasenrader, Hubert

(56) Documents cités:
- DE-A- 3 338 279
- GB-A- 2 210 836
- US-A- 4 390 202

## Description

La présente invention concerne un procédé pour réaliser un bras de support coudé pour pare-soleil alimenté électriquement par au moins deux conducteurs.

On connaît des pare-soleil pour habitacle d'automobile qui sont munis de miroirs de courtoisie susceptibles d'être éclairés par des ampoules alimentées par deux conducteurs électriques qui sont eux-mêmes reliés à des fils d'alimentation cachés dans le pavillon. Ces conducteurs peuvent passer à côté du bras de support du pare-soleil, mais il est préférable, du point de vue esthétique, de les rendre invisibles en les faisant cheminer à travers le bras de support (Voir, par exemple, DE-A-3 338 279). C'est pourquoi, le bras de support d'un pare-soleil alimenté électriquement est habituellement réalisé par surmoulage d'un insert avec une matière plastique. Cet insert peut être un tube creux dans le conduit duquel on fait passer au moins un fil conducteur électrique. Le tube est généralement en métal et il peut jouer le rôle du deuxième conducteur relié à la masse.

Le câblage de ce bras de support présente toutefois des difficultés, car le bras de support est coudé pour permettre l'articulation du pare-soleil autour d'un axe horizontal et son pivotement autour d'un axe vertical.

Il faut donc couder l'insert creux avant son surmoulage, ce qui peut provoquer des pliures et des rétrécissements au niveau du coude du conduit. Il s'ensuit des difficultés pour passer le ou les fils conducteurs, voire même des rebuts de fabrication. Les bras de support réalisés de cette façon sont d'un prix de revient élevé du fait des opérations nécessaires pour réaliser les inserts, les couder et passer les fils conducteurs. A ceci, il faut ajouter les coûts des connecteurs pour relier les extrémités de l'insert à l'ampoule d'une part, et à la masse ou à un fil d'alimentation, d'autre part.

Il est également connu de réaliser le bras de support par surmoulage d'un insert métallique plein avec une matière plastique. Cet insert constitue l'un des conducteurs de l'alimentation électrique du pare-soleil. Le deuxième conducteur est, dans ce cas, prévu au niveau de l'autre tige du support du pare-soleil, qui retient celui-ci par son extrémité éloignée du bras de support par coopération avec une gorge solidaire du pavillon et appelée crochet central.

Cette solution a l'avantage de proposer un bras de support particulièrement solide, mais elle a l'inconvénient de nécessiter un contact électrique parfait entre ladite tige et ladite gorge lorsqu'on veut éclairer le miroir de fantaisie, et le dispositif d'éclairage du pare-soleil est inopérant lorsque la tige ne coopère pas avec cette gorge. Cette disposition de l'autre tige de support augmente sérieusement les prix de revient.

Il est déjà connu de réaliser les bras de support coudés actuels par surmoulage d'un insert creux ou plein avec une matière plastique. L'insert est positionné dans la cavité du moule et maintenu écarté des parois par des plots solidaires du moule. Ces plots augmentent le coût de fabrication du moule et créent des fentes ouvertes sur la paroi externe du bras de support fini, lesdites fentes diminuant la résistance de celui-ci.

On connaît également des procédés pour recouvrir des fils électriques souples par une couche d'isolation. Dans ces procédés, les fils à recouvrir se déroulent en continu et sont maintenus rectilignes et tendus pendant la phase de revêtement pour que la matière isolante recouvre la totalité de la surface latérale du fil avec une épaisseur sensiblement homogène. Ces processus ne peuvent pas être utilisés pour le surmoulage de fils électriques souples en vue de créer les bras de support coudés de la présente invention, du fait que les fils, présentant un coude dans le moule, ne peuvent être maintenus tendus par traction. On pourrait évidemment prévoir un moule comportant des guides multiples pour maintenir les fils écartés des parois. Mais, dans ce cas, le bras de support réalisé présenterait un trop grand nombre de fentes et deviendrait trop fragile.

Le but de la présente invention est de proposer un procédé pour réaliser un bras de support coudé pour pare-soleil alimenté électriquement par deux conducteurs cheminant dans ledit bras de support, de manière simple et économique. Le pare-soleil peut être équipé d'un miroir éclairant ou de tout autre accessoire électrique.

Le but est atteint selon l'invention par le fait que l'on surmoule une portion au moins desdits conducteurs avec une matière plastique en deux étapes : une première étape dans laquelle on surmoule ensemble une portion de conducteurs avec une matière plastique de manière à obtenir une ébauche de bras de support dont une première partie au moins présente une section inférieure à la section correspondante dudit bras de support, et une seconde partie présente une section égale à la section correspondante dudit bras de support, cette seconde partie permettant de maintenir l'ébauche dans un deuxième moule pendant une deuxième étape de surmoulage.

Selon une variante de réalisation de l'invention, la matière plastique utilisée dans la deuxième étape peut être différente de la matière plastique employée dans la première étape.

Les fils conducteurs peuvent être disposés sans soin particulier dans le premier moule. L'ébauche peut présenter sur ses parois externes des zones où l'un des conducteurs est visible, mais cela n'a pas beaucoup d'importance car cette ébauche rigide sera surmoulée dans la phase suivante de la même manière que l'on surmoule l'insert du bras de support actuel.

De façon avantageuse, on réalise les parties d'extrémité dudit bras de support dans la première étape et on termine le surmoulage de la partie coudée dans la deuxième étape.

Ceci permet d'avoir des moules qui ne nécessitent pas de plots pour supporter l'ébauche dans la deuxième phase du surmoulage, car les extrémités du bras de support étant déjà terminées, celles-ci permettent de maintenir l'ébauche dans le deuxième moule pendant la deuxième phase du surmoulage.

D'autres caractéristiques et avantages de la présente invention apparaîtront à la lecture de la description suivante faite en référence aux dessins annexées dans lesquels :
- la figure 1 montre un schéma de principe du pare-soleil alimenté électriquement par deux conducteurs,
- la figure 2 montre un bras de support de pare-soleil selon l'invention dans lequel deux fils électriques isolés sont enrobés dans la matière plastique constituant le bras de support,
- la figure 3 est une occupe selon la ligne III-III de la figure 2,
- la figure 4 montre un bras de support de pare-soleil selon l'invention dans lequel un câble coaxial est enrobé dans la matière plastique,
- la figure 5 est une coupe suivant la ligne V-V de la figure 4,
- la figure 6 montre un bras de support de pare-soleil selon l'invention dans lequel deux lames métalliques sont noyées dans la matière plastique,
- la figure 7 est une coupe suivant la ligne VII-VII de la figure 6,
- la figure 8 représente le premier moule destiné à former une ébauche du bras de support,
- la figure 9 montre l'ébauche obtenue dans la première phase du surmoulage,
- la figure 10 montre le deuxième moule destiné au surmoulage de l'ébauche de la figure 9, et
- la figure 11 montre le bras de support obtenu dans la deuxième phase du surmoulage.

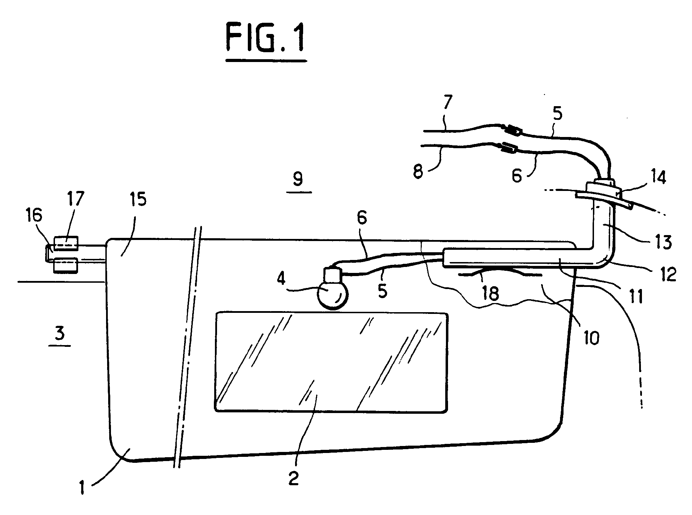

La figure 1 montre un pare-soleil 1 pour habitacle d'automobile comportant un miroir de courtoisie 2 susceptible d'être éclairé, du moins en position rabattue contre le pare-brise 3, par une lampe 4 alimentée par deux conducteurs 5 et 6. Les conducteurs 5 et 6 sont eux-mêmes reliés à des fils d'alimentation 7 et 8 cachés dans le pavillon 9. Le pare-soleil 1 est supporté à l'une de ses extrémités 10 par la branche horizontale 11 d'un bras de support coudé 12 en forme de L dont la branche verticale 13 est montée pivotante sur une embase 14 fixée au pavillon 9, et à l'autre extrémité 15 par une tige de support 16 susceptible de coopérer par encliquetage avec une gorge 17 solidaire du pavillon 9. Le pare-soleil 1 peut pivoter autour de la branche horizontale 11 du bras de support 12 et être immobilisé soit en position rabattue contre le pare-brise 3, soit en position relevée, grâce à des ressorts plats 18 ccoopérant avec un méplat formé sur la paroi de la branche horizontale 11 du bras de support 12.

Par souci d'esthétique, les conducteurs 5 et 6 cheminent par le coeur du bras de support 12. De préférence, les parties 5a, 5b, 6a, 6b de ces conducteurs 5 et 6 situées à l'extérieur du bras de support 12 sont constituées par des fils électriques souples recouverts par un revêtement isolant 21.

Selon l'invention, les portions 5c et 6c des conducteurs 5 et 6, qui cheminent dans le bras de support 12 sont intimement liées au bras de support 12 du fait que celui-ci est réalisé par surmoulage desdites portions 5c et 6c avec une matière plastique.

Les portions 5c et 6c peuvent être constituées par tout type de conducteur électrique nu ou isolé électriquement.

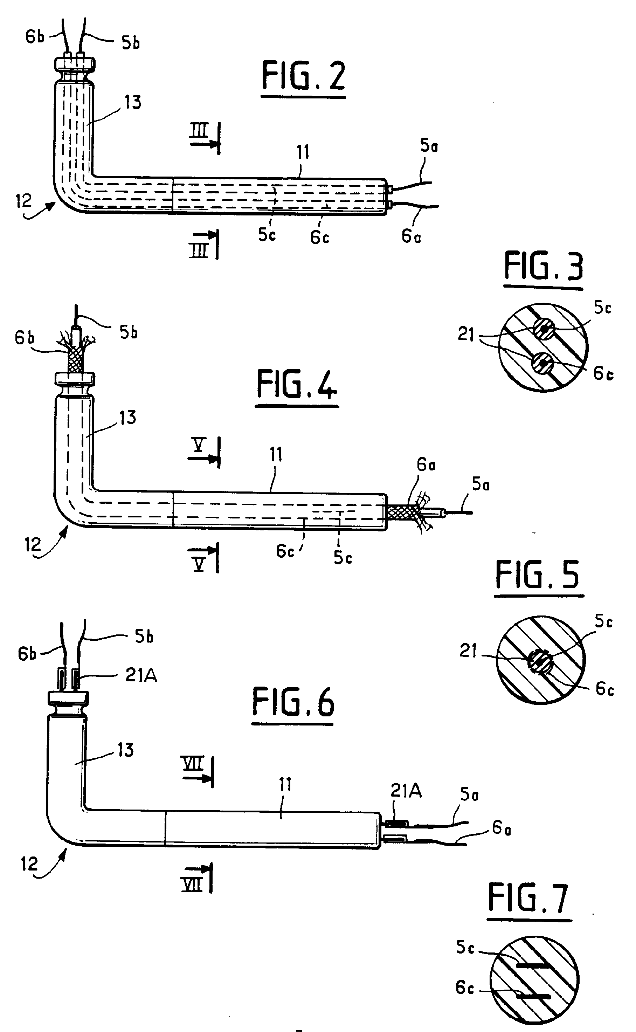

Lorsque les portions 5c et 6c sont du type conducteur électrique nu, elles peuvent être formées par des lamelles de cuivre, comme représenté par les figures 6 et 7, que l'on coude et que l'on dispose séparées l'une de l'autre dans un moule approprié dans lequel on injecte la matière plastique formant le bras de support 12. Les parties 5a, 5b, 6a, 6b sont ensuite fixées par des connecteurs 21A sur les extrémités des lames de cuivre qui sortent de la matière plastique aux extrémités libres des branches 11 et 13.

Lorsque les portions 5c et 6c sont du type conducteur isolé électriquement, il est conseillé que ces portions 5c et 6c forment respectivement avec les parties 5a, 5b et 6a, 6b un seul et même fil électrique isolé électriquement.

Dans ce cas, les deux conducteurs 5 et 6 peuvent être constitués par deux fils électriques isolés et souples, comme représenté sur les figures 2 et 3, dont le revêtement isolant 21 est prévu pour résister aux températures d'injection de la matière plastique.

Ils peuvent également se présenter sous forme d'un câble coaxial comme le montrent les figures 4 et 5. La gaine de ce câble est de préférence métallique et elle peut être constituée par une tresse de fils qui forme le deuxième conducteur 6.

Le surmoulage des portions 5c et 6c des conducteurs 5 et 6 est réalisé de préférence par un double surmoulage de ces portions 5c et 6c de manière à obtenir dans une phase intermédiaire une ébauche 22 dont la partie coudée au moins présente une section inférieure à la section du bras de support 12.

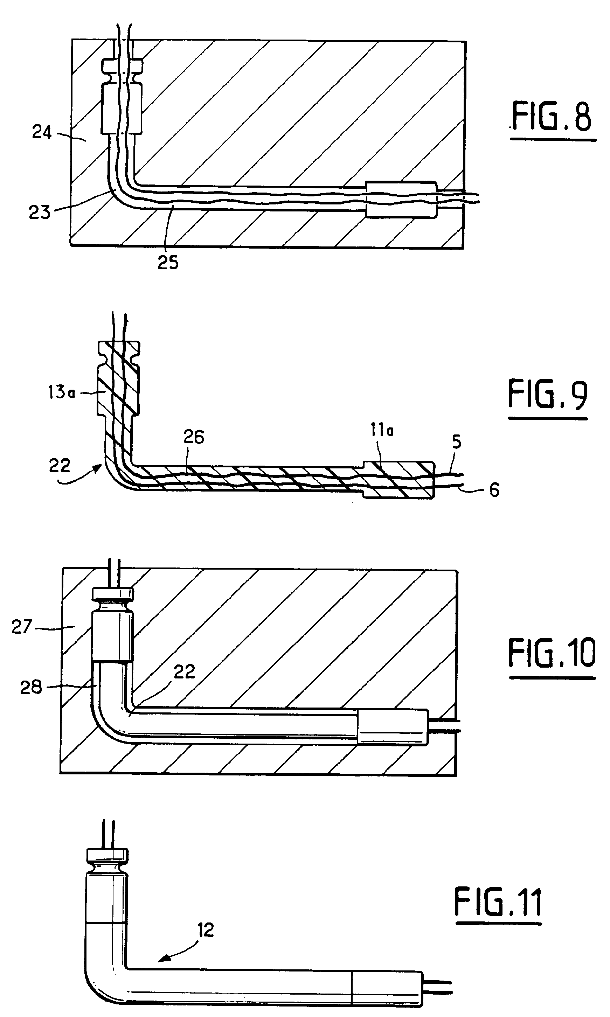

Les figures 8 et 10 montrent les demi-moules utilisés dans chaque phase de surmoulage. Comme on le voit sur la figure 8, la cavité 23 du premier moule 24, présente, dans sa région médiane coudée 25, une section inférieure à la section du bras de support 12 à obtenir.

Ce premier moule 24 permet d'obtenir l'ébauche 22 montrée à la figure 9, dans laquelle on voit que les extrémités 11a et 13a des branches 11 et 13 ont exactement les dimensions des extrémités des branches 11 et 13. Dans la partie intermédiaire coudée 26, les conducteurs 5 et 6 peuvent être apparents. Les conducteurs 5 et 6 sont disposés dans cette cavité 23 sans soin particulier et ils peuvent être en contact avec les parois délimitant la région médiane coudée de la cavité 23.

Le deuxième moule 27 montré sur la figure 10 présente une cavité 28 dont les dimensions sont conformes à celles du bras de support 12. L'ébauche 22 obtenue par le premier moule 24 est surmoulée dans ce deuxième moule 27. Les extrémités 11a et 13a de l'ébauche permettent de retenir la partie intermédiaire 26 de l'ébauche 22 à l'écart des parois délimitant la cavité 28. Une matière plastique, dont la composition peut être différente de celle constituant l'ébauche 22, est injectée dans la partie coudée 30 de la cavité 28 permettant ainsi d'obtenir le bras de support 12 représenté à la figure 11.

## Revendications

1. Procédé pour réaliser un bras de support coudé (12) pour pare-soleil (1) alimenté électriquement par au moins deux conducteurs (5, 6) cheminant dans ledit bras de support (12), caractérisé en ce qu'on surmoule une portion au moins (5c, 6c) desdits conducteurs (5, 6) avec une matière plastique en deux étapes : une première étape dans laquelle on surmoule ensemble une portion de conducteurs (5c, 6c) avec une matière plastique de manière à obtenir une ébauche de bras de support (22) dont une première partie au moins (26) présente une section inférieure à la section correspondante dudit bras de support (12), et une seconde partie présente une section égale à la section correspondante dudit bras de support (12), cette seconde partie permettant de maintenir l'ébauche (22) dans un deuxième moule pendant une deuxième étape de surmoulage.

2. Procédé selon la revendication 1, caractérisé en ce que la matière plastique utilisée dans la deuxième étape est différente de la matière plastique employée dans la première étape.

3. Procédé selon l'une des revendications 1 ou 2, caractérisé en ce qu'on réalise les parties d'extrémité (11a, 13a) du bras de support (12) dans la première étape et on termine le surmoulage de la partie coudée (26) dans la deuxième étape.

## Patentansprüche

1. Verfahren zum Herstellen eines abgewinkelten Montagearms (12) für eine Sonnenblende, der mit elektrischem Strom über wenigstens zwei im genannten Montagearm (12) verlegte Leitungen (5, 6) versorgt wird,
dadurch **gekennzeichnet**, daß wenigstens ein Abschnitt (5c, 6c) der genannten Leitungen (5, 6) mit einem Kunststoff in zwei Arbeitsschritten umgossen wird, wobei in einem ersten Arbeitsschritt ein Abschnitt von Leitern (5c, 6c) mit einem Kunststoff diese verbindend so umgossen wird, daß ein Montagearm-Rohling (22) entsteht, von dem wenigstens ein erster Teil (26) einen Querschnitt hat, der kleiner ist als der entsprechende Querschnitt des genannten Montagearms (12), und ein zweiter Teil einen Querschnitt hat, der gleich ist dem entsprechenden Querschnitt des genannten Montagearms (12), wobei dieser zweite Teil es ermöglicht, den Rohling (22) während eines zweiten Umgieß-Arbeitsschrittes in einem zweiten Formwerkzeug zu halten.

2. Verfahren nach Anspruch 1,
dadurch **gekennzeichnet**, daß der im zweiten Arbeitsschritt verwendete Kunststoff von dem im ersten Arbeitsschritt verwendeten Kunststoff verschieden ist.

3. Verfahren nach einem der Ansprüche 1 oder 2,
dadurch **gekennzeichnet**, daß die Endstücke (11a, 13a) des Montagearms (12) im ersten Arbeitsschritt hergestellt werden und das Umgießen des abgewinkelten Teils (26) im zweiten Arbeitschritt beendet wird.

## Claims

1. Method of making an angled support arm (12) for a sun-visor (1) which is electrically powered by at least two conductors (5, 6) passing inside said support arm (12), characterized in that a plastic material is molded over at least a portion (5c, 6c) of said conductors (5, 6) in two stages: a first stage in which a plastic material is molded over a portion of conductors (5c, 6c) such as to obtain a support arm blank (22) of which at least a first portion (26) has a cross-section smaller than the corresponding cross-section of said support arm (12), said second part enabling the blank (22) to be held in a second mold during a second overmolding stage.

2. Method according to claim 1, characterized in that the plastic material used in the second stage is different from the plastic material used in the first stage.

3. Method according to one of claims 1 or 2, characterized in that the end portions (11a, 13a) of the support arm (12) are formed during the first stage and the overmolding of the angled portion (26) is completed during the second stage.
